# EUROPÄISCHE PATENTANMELDUNG

(11) **EP 4 327 639 A1**
(43) Veröffentlichungstag der Anmeldung: **28.02.2024**
(21) Anmeldenummer: 23179406.6
(22) Anmeldetag: 15.06.2023
(51) Int. Cl.: A01B 63/10, A01B 63/11, A01B 63/112, A01B 63/114, A01B 63/00, A01B 63/14

(54) **VERFAHREN ZUM BETREIBEN EINES LANDWIRTSCHAFTLICHEN ARBEITSSYSTEMS**

(30) Priorität: 25.08.2022 DE 102022121568
(71) Anmelder: CLAAS Tractor S.A.S., 78141 Vélizy-Villacoublay Cedex (FR)
(72) Erfinder: Birkmann, Christian, 33775 Versmold (DE); Schaub, Christian, 33098 Paderborn (DE)
(74) Vertreter: CLAAS Gruppe

(57) **Zusammenfassung**

Die vorliegende Erfindung betrifft ein Verfahren zum Betreiben eines landwirtschaftlichen Arbeitssystems, umfassend eine zumindest zwei Achsen (2, 3) aufweisende landwirtschaftliche Arbeitsmaschine (1) mit zumindest einer Geräteschnittstelle (14) sowie ein Anbaugerät (15), welches mittels der Geräteschnittstelle (14) mit der Arbeitsmaschine (1) zur Durchführung eines landwirtschaftlichen Arbeitsprozesses verbunden wird, wobei eine Achslast (F_{FA,x}, F_{FA,z}, F_{RA,x}, F_{RA,z}) an zumindest einer Achse (2, 3) mittels einer Sensoranordnung (13) bestimmt wird, wobei an den Achsen (2, 3) der Arbeitsmaschine (1) auftretende Achslasten (F_{FA,x}, F_{FA,z}, F_{RA,x}, F_{RA,z}) und ein darauf basierendes Achslastverhältnis unter Berücksichtigung einer Arbeitsmaschinen- und Anbaugerätekonfiguration sowie von Betriebsparametern mittels einer Recheneinheit (8) eines Fahrerassistenzsystems (7) der Arbeitsmaschine (1) zeitlich an die Durchführung des Arbeitsprozesses gekoppelt zyklisch bestimmt werden.

## Beschreibung

Die vorliegende Erfindung betrifft ein Verfahren zum Betreiben eines landwirtschaftlichen Arbeitssystems gemäß dem Oberbegriff des Anspruches 1 sowie ein landwirtschaftliches Arbeitssystem gemäß dem Oberbegriff des Anspruches 15.

Für das Betreiben eines landwirtschaftlichen Arbeitssystems welches durch eine landwirtschaftliche Arbeitsmaschine und ein mit einer Geräteschnittstelle der Arbeitsmaschine verbundenes Anbaugerät gebildet wird, und zur Durchführung eines landwirtschaftlichen Arbeitsprozesses eingerichtet ist, ist es zur Optimierung der Ballastierung erforderlich, an Achsen der Arbeitsmaschine im Arbeitsprozess auftretende Achslasten zu bestimmen, die durch Kräfte des Anbaugerätes beeinflusst werden, welche über die Geräteschnittstelle auf die Arbeitsmaschine übertragenen werden. Die Achslasten und die Achslastverteilung haben einen signifikanten Einfluss auf die Gesamteffizienz bei der Durchführung eines landwirtschaftlichen Arbeitsprozesses sowie den Verschleiß und die Betriebssicherheit der Arbeitsmaschine. So werden vor Beginn der Durchführung eines landwirtschaftlichen Arbeitsprozesses die Achslasten des Arbeitssystems bestimmt, um durch eine geeignete Ballastierung eine für den Betrieb des Arbeitssystems erforderliche Achslastverteilung einzustellen. Die vorgenommene Ballastierung basiert auf der vor Beginn der Durchführung des landwirtschaftlichen Arbeitsprozesses bestimmten Achslastverteilung.

Eine Vorrichtung sowie ein Verfahren zur Bestimmung der Achslast an den Achsen einer Arbeitsmaschine ist aus der DE 10 2015 114 262 A1 bekannt.

Die Achslastverteilung unterliegt während der Durchführung des landwirtschaftlichen Arbeitsprozesses verschiedenen, von der Konfiguration des Arbeitssystems und Betriebsparametern abhängigen Einflüssen, wobei insbesondere die Betriebsparameter während der Durchführung des landwirtschaftlichen Arbeitsprozesses fortlaufend Änderungen unterliegen, die sich unmittelbar auf die Achslastverteilung respektive das Achslastverhältnis auswirken. Eine unangepasste Einstellung des Achslastverhältnisses führt zu einem erhöhten Kraftstoffverbrauch, resultiert in einer geringeren Flächenleistung, höheren flächenspezifischen Kosten sowie einem erhöhten Verschleiß an der Arbeitsmaschine und dem Anbaugerät.

Ausgehend vom vorstehend genannten Stand der Technik liegt der Erfindung die Aufgabe zugrunde, ein Verfahren zum Betreiben eines landwirtschaftlichen Arbeitssystems sowie ein landwirtschaftliches Arbeitssystem auszugestalten und weiterzubilden, sodass ein effizienterer Betrieb des Arbeitssystems unter Berücksichtigung von sich dynamisch ändernden Bedingungen während der Durchführung eines landwirtschaftlichen Arbeitsprozesses ermöglicht wird.

Diese Aufgabe wird durch ein Verfahren mit den Merkmalen des Anspruches 1 sowie durch ein landwirtschaftliches Arbeitssystem mit den Merkmalen des nebengeordneten Anspruches 15 gelöst. Vorteilhafte Ausführungsformen und Weiterbildungen sind den hiervon abhängigen Ansprüchen zu entnehmen.

Gemäß Anspruch 1 wird ein Verfahren zum Betreiben eines landwirtschaftlichen Arbeitssystems vorgeschlagen, wobei das landwirtschaftliche Arbeitssystem eine zumindest zwei Achsen aufweisende landwirtschaftliche Arbeitsmaschine mit zumindest einer Geräteschnittstelle sowie ein Anbaugerät umfasst, wobei das Anbaugerät mittels der Geräteschnittstelle mit der Arbeitsmaschine zur Durchführung eines landwirtschaftlichen Arbeitsprozesses verbunden wird, wobei eine Achslast an zumindest einer Achse mittels einer Sensoranordnung bestimmt wird. Erfindungsgemäß ist vorgesehen, dass an den Achsen der Arbeitsmaschine auftretende, insbesondere vertikale, Achslasten und ein darauf basierendes Achslastverhältnis unter Berücksichtigung einer Arbeitsmaschinen- und Anbaugerätekonfiguration sowie von Betriebsparametern mittels einer Recheneinheit eines Fahrerassistenzsystems der Arbeitsmaschine zeitlich an die Durchführung des Arbeitsprozesses gekoppelt zyklisch bestimmt werden.

Der Erfindung liegt die Überlegung zugrunde, dass die Achslastverteilung im laufenden Betrieb des landwirtschaftlichen Arbeitssystems, d.h. während der Durchführung eines landwirtschaftlichen Arbeitsprozesses, aufgrund sich ändernder Betriebsparameter signifikanten Änderungen unterliegt. In welchem Umfang und in welcher Weise sich die Achslastverteilung verändert, ist dem Bediener des Arbeitssystems nicht bekannt und in der Regel auch nicht unmittelbar wahrnehmbar. Die zyklische, in bestimmten, vorzugsweise konstanten, Zeitabständen, durchgeführte Bestimmung der an den Achsen der Arbeitsmaschine auftretenden Achslasten und des darauf basierenden Achslastverhältnisses unter Berücksichtigung der Arbeitsmaschinen- und Anbaugerätekonfiguration sowie der aktuellen Betriebsparameter ermöglicht es, dem Bediener annähernd in Echtzeit Informationen über die sich dynamisch ändernden Achslasten und die Achslastverteilung während der Durchführung des Arbeitsprozesses bereitzustellen. Hierdurch wird es ermöglicht, durch das Achslastverhältnis beeinflusste Kenngrößen, wie den Kraftstoffverbrauch, die Flächenleistung, die flächenspezifischen Kosten, die Bodenverdichtung sowie den an der Arbeitsmaschine und dem verbundenen Anbaugerät entstehenden Verschleiß, durch geeignete Maßnahmen zu optimieren.

Zur Bestimmung der, insbesondere vertikalen, Achslast an zumindest einer Achse der Arbeitsmaschine, insbesondere der Vorderachse, kann vorgesehen sein, diese beispielsweise mittels des Drucks im hydropneumatischen oder pneumatischen Federungssystem oder durch Wegmessung in einem mechanischen Federungssystem zu bestimmen. Eine Alternative sieht eine Kraft-Weg-Messsensorik an der zu vermessenden Achse vor.

Bevorzugt kann das Fahrerassistenzsystem eine Bedien- und Anzeigeeinheit umfassen, mittels der die auftretenden Achslasten und das Achslastverhältnis sowie deren Änderungen während der Durchführung des Arbeitsprozesses visualisiert werden. Der Bediener kann anhand von grafisch dargestellten Verläufen für die, insbesondere vertikalen, Achslasten und das Achslastverhältnis frühzeitig auf Änderungen aufmerksam gemacht werden, die sich nachteilig auf die Kenngrößen auswirken.

Insbesondere kann die bestehende Arbeitsmaschinen- und Anbaugerätekonfiguration durch einen Bediener des Arbeitssystems zumindest teilweise vorgegeben und/oder zumindest teilweise automatisch durch das Fahrerassistenzsystem ermittelt werden. Somit kann der Bestimmung der sich dynamisch ändernden Achslasten eine initiale Ballastierung des Arbeitssystems zugrunde gelegt werden, welche die für die nachfolgende Bestimmung während des Arbeitsprozesses notwendigen Ausgangswerte darstellen. Hierbei können die Arbeitsmaschinenkonfiguration und die Anbaugerätekonfiguration zumindest teilweise durch den Bediener des Arbeitssystems aus einer in einer Speichereinheit des Fahrerassistenzsystems hinterlegten Datenbank ausgewählt werden. Alternativ oder zusätzlich kann das Fahrerassistenzsystem in einem interaktiven Dialog mit dem Bediener zumindest einen Teil der Arbeitsmaschinenkonfiguration und/oder der Anbaugerätekonfiguration ermitteln. Alternativ oder zusätzlich kann das Fahrerassistenzsystem zur Bestimmung des Anbaugerätes eingerichtet sein. Hierzu kann das Fahrerassistenzsystem dazu eingerichtet sein, beispielsweise mit einer Anbaugerätesteuerung zu kommunizieren oder einen Datenspeicher an dem Anbaugerät auszulesen.

Gegenstand der Arbeitsmaschinenkonfiguration sind unter anderem die Masse der Arbeitsmaschine, die Schwerpunktlage der leeren Arbeitsmaschine, Masse und Lage zusätzlich an der Arbeitsmaschine angeordneter Gewichte, die Art der Geräteschnittstelle an der Arbeitsmaschine zur Verbindung mit dem Anbaugerät. Bei den aus der Masse von Arbeitsmaschine sowie daran angebauten Gewichten resultierenden Gewichtskräften ist der Einfluss der Geländetopologie, Steigungen sowie Gefälle, zu berücksichtigen.

Gegenstand der Anbaugerätekonfiguration sind unter anderem die Masse des Anbaugerätes, die Schwerpunktlage des Anbaugerätes, der Kraftangriffspunkt der Bodenwiderstandskräfte/Rollwiderstände innerhalb des Anbaugerätes, die Lage von zumindest einer optional am Anbaugerät angeordneten gewichtsabstützenden Einrichtung. Die Masse des Anbaugerätes kann zudem durch daran angeordnete Speicherbehälter mit variierendem Füllstand beeinflusst werden, was ebenfalls Gegenstand der Anbaugerätekonfiguration sein kann. Beispielsweise kann eine Abschätzung der Bodenwiderstandskräfte an Werkzeugen zur Bodenbearbeitung eines Anbaugerätes über Zugleistung und Fahrzeuggeschwindigkeit erfolgen. Die Zugleistung wiederum kann mittels Antriebsmotorleistung, Getriebewirkungsgrad, Antriebsstrangwirkungsgrad sowie einem Wirkungsgrad der Bodeneingriffsmittel bestimmt werden. Alternativ kann die Zugleistung mittels Getriebeausgangsleistung, Antriebsstrangwirkungsgrad sowie einem Wirkungsgrad der Bodeneingriffsmittel abgeschätzt werden. Andere Betriebsparameterkombinationen zur Abschätzung der Zugleistung sind denkbar.

Bei der Geräteschnittstelle handelt es sich hier ganz allgemein um eine mechanische Kupplung zwischen der Arbeitsmaschine und dem Anbaugerät. Dazu kann die Geräteschnittstelle als Dreipunkt-Kraftheber ausgestaltet sein. Die Geräteschnittstelle kann als Front- oder Heckkraftheber ausgestaltet sein. Alternativ kann es sich bei der Geräteschnittstelle um ein Zugpendel handeln. Andere Varianten für die Geräteschnittstelle sind Systeme mit einfacher Zugzapfenkupplung, mit Hitch Haken, mit Kugelkopfkupplung oder dergleichen.

Insbesondere kann in Kenntnis der Anbaugerätekonfiguration anbaugerätespezifisch eine über die zumindest eine Geräteschnittstelle auf die Arbeitsmaschine übertragene Geräteschnittstellenlast bestimmt werden. Die Geräteschnittstellenlast umfasst gewichtsbedingte Lastanteile, bei denen es sich um gravitationsbedingte und/oder trägheitsbedingte Lastanteile handelt sowie prozessbedingte Lastanteile, welche beispielsweise auf den Eingriff zwischen Anbaugerät und Feldboden zurückgehen, der beim Pflügen oder dergleichen stattfindet.

Weiterhin kann zwischen einem angehängten und einem angebauten Anbaugerät zur Bodenbearbeitung sowie einem angehängten Anbaugerät, welches dem Transport von Erntegut, Hilfs- und/oder Betriebsstoffen dient, differenziert werden.

So kann bei einem angebauten Anbaugerät zur Bodenbearbeitung in einem ersten Schritt eine auf zumindest eine gewichtsabstützende Einrichtung abgestützte Vertikalkraft aus einem Momentengleichgewicht um eine der Achsen, insbesondere der Hinterachse, der Arbeitsmaschine bestimmt werden und in einem zweiten Schritt kann eine auf diese Achse einwirkende vertikale Achslast bestimmt werden. Erfolgt die Bestimmung einer Achslast mittels der Sensoranordnung an der Hinterachse, kann die auf die zumindest eine gewichtsabstützende Einrichtung abgestützte Vertikalkraft aus einem Momentengleichgewicht um die Vorderachse bestimmt werden.

Bei einem angehängten Anbaugerät zur Bodenbearbeitung können in einem ersten Schritt auf Werkzeuge des Anbaugerätes ausgeübte Werkzeugkräfte über Zugleistung und aktuelle Fahrgeschwindigkeit der Arbeitsmaschine, ein von dem Anbaugerät auf die Arbeitsmaschine wirkendes Koppelmoment sowie eine vertikale Koppelkraft mittels Anbaugerätegeometrie und der Bestimmung eines Momentengleichgewicht um die zumindest eine gewichtsabstützende Einrichtung bestimmt werden und in einem zweiten Schritt kann eine auf eine der Achsen, insbesondere die Hinterachse, einwirkende vertikale Achslast bestimmt werden.

Bei einem angehängten Anbaugerät, welches dem Transport von Erntegut, Hilfs- und/oder Betriebsstoffen dient, kann in einem ersten Schritt eine Abschätzung des Rollwiderstands zur Bestimmung der Koppelkräfte durchgeführt werden und in einem zweiten Schritt kann eine auf eine der Achsen, insbesondere die Hinterachse, einwirkende vertikale Achslast bestimmt werden. Ein dem Transport von Erntegut, Hilfs- und/oder Betriebsstoffen dienendes Anbaugerät kann ein Güllefass, ein Transportanhänger und dergleichen sein.

Gemäß einem weiteren Aspekt kann ein variable Füllvolumen eines Behältnisses des Anbaugerätes und/oder der Arbeitsmaschine und/oder die räumliche Anordnung des Behältnisses in Bezug auf die Arbeitsmaschine bei der Bestimmung der Achslast berücksichtigt werden. Behältnisse mit variablem Füllvolumen sind neben einem Kraftstofftank, ein Zusatzstofftank, ein Saatgut- und/oder Düngerbehälter, ein Flüssigkeitsbehälter einer Pflanzenschutzspritze, das Güllefass und dergleichen. Die Lage respektive räumliche Anordnung sowie Angaben zum maximalen Füllvolumen eines Behältnisses kann sich aus der Anbaugerätekonfiguration und/oder der Arbeitsmaschinenkonfiguration ergeben. Ein Ist-Füllstand, der sich während der Durchführung eines landwirtschaftlichen Arbeitsprozesses fortlaufend ändern kann, kann sensorisch erfasst und durch die Recheneinheit des Fahrerassistenzsystems oder eine separate Auswerteeinheit ausgewertet werden.

Weiterhin kann in einem dritten Schritt das Achslastverhältnis bestimmt werden und in einem vierten Schritt kann eine Abschätzung eines Antriebsmomentes an den Achsen der Arbeitsmaschine durchgeführt werden. Die Ausführung des dritten und vierten Schrittes ist unabhängig davon, ob das Anbaugerät angehängt oder angebaut ist.

Dabei kann zur Abschätzung des Antriebsmomentes eine Abschätzung eines Triebkraftbeiwertes unter Verwendung von in den ersten und zweiten Schritten bestimmten Grö-βen für angehängte oder angebaute Anbaugeräte durchgeführt werden. Bei der Abschätzung des Antriebsmomentes kann die jeweilige Ausführung von Bodeneingriffsmitteln der Arbeitsmaschine Einfluss haben. Sind anstelle von Rädern als Bodeneingriffsmittel Raupenlaufwerke an zumindest einer Achse vorgesehen, ist eine separate Berücksichtigung der mechanischen Eigenschaften und/oder der Bauform der Raupenlaufwerke vorgesehen. Die Abschätzung des Triebkraftbeiwertes kann mittels einer Abschätzung einer Zugkraft, welche aus der Zugleistung und der aktuellen Fahrgeschwindigkeit der Arbeitsmaschine bestimmt werden kann, durchgeführt werden.

Insbesondere kann zur Bestimmung einer initialen Ballastierung der Arbeitsmaschine ein dialogbasierter Ablauf durch das Fahrerassistenzsystem vorgegeben werden. Der dialogbasierte, insbesondere interaktive, Ablauf vereinfacht die Bestimmung der initialen Ballastierung. Durch die Bestimmung der initialen Ballastierung können Einflüsse auf die verfahrensgemäße Bestimmung der aktuellen Achslast berücksichtigt werden. Insbesondere ist auf Seiten des Bedieners kein spezifisches Hintergrundwissen zur Bestimmung der initialen Ballastierung erforderlich, wenn dieser mittels einer vorgegeben schrittweisen Handlungsabfolge durch die erforderlichen Teilschritte zur Bestimmung der initialen Ballastierung geführt wird.

Hierbei kann für die initiale Ballastierung zumindest eine Bestimmung von Leergewicht und Schwerpunkt der Arbeitsmaschine, eine Kalibrierung einer Achslastmessung an der zumindest einen zu vermessenden Achse, insbesondere der Vorderachse, eine Bestimmung eines Koppelmomentes, insbesondere mit einem Drehmoment übertragenden Zugkraftverstärker, für angehängte Anbaugeräte sowie eine Bestimmung eines Schwerpunktes für angebaute Anbaugeräte durchgeführt werden.

Bevorzugt kann durch das Fahrerassistenzsystem die während der Durchführung des Arbeitsprozesses zyklisch bestimmten vertikalen Achslasten und die Achslastverteilung mit Grenzwerten verglichen werden und bei einem Passieren eines der Grenzwerte ein Warnhinweis mittels der Bedien- und Anzeigeeinheit ausgegeben werden. Mittels der Warnung kann beispielsweise auf das Über- oder Unterschreiten der technischen oder gesetzlichen Achslasten hingewiesen werden.

Gemäß einer Weiterbildung können durch das Fahrerassistenzsystem beim Passieren eines der Grenzwerte eine Anpassung von zumindest einem Betriebsparameter bestimmt werden, der dem Bediener mittels der Bedien- und Anzeigeeinheit zur manuellen Auswahl und/oder zur manuellen Durchführung vorgeschlagen wird und/oder von dem Fahrerassistenzsystem automatisch umgesetzt werden kann. Anpassbare Betriebsparameter des landwirtschaftlichen Arbeitssystems sind beispielsweise die Änderung der front- oder heckseitig angebrachten Ballastierung oder eine, insbesondere automatisierte, Anpassung des Reifendrucks mittels eines Reifenkontrollsystems, mittels eines Kompressors oder dergleichen. Weitere anpassbare Betriebsparameter können eine Regelung von pneumatischen oder hydropneumatischen Federeinheiten der Arbeitsmaschine, eine Fahrwerkssteifigkeit der Arbeitsmaschine und/oder eine Zugkraft sein. Des Weiteren kann eine Verstellung von einem oder mehreren Einstellparametern des Anbaugerätes vorgeschlagen werden. Die zyklische Bestimmung der vertikalen Achslasten und des Achslastverhältnisses kann auch zur Kalibrierung von Getriebe- und Bremsparametern herangezogen werden.

Weiterhin wird die eingangs gestellte Aufgabe durch ein landwirtschaftliches Arbeitssystem mit den Merkmalen des nebengeordneten Anspruches 15 gelöst.

Gemäß dem nebengeordneten Anspruch wird ein landwirtschaftliches Arbeitssystem vorgeschlagen, umfassend eine zumindest zwei Achsen aufweisende landwirtschaftliche Arbeitsmaschine mit zumindest einer Geräteschnittstelle sowie ein Anbaugerät, welches mittels der Geräteschnittstelle mit der Arbeitsmaschine zur Durchführung eines landwirtschaftlichen Arbeitsprozesses verbunden ist, wobei an zumindest einer Achse eine Sensoranordnung zur Bestimmung einer Achslast angeordnet ist, wobei die Arbeitsmaschine ein Fahrerassistenzsystem mit einer Recheneinheit umfasst, welches dazu eingerichtet ist, an den Achsen der Arbeitsmaschine auftretende Achslasten und ein darauf basierendes Achslastverhältnis unter Berücksichtigung einer Arbeitsmaschinen- und Anbaugerätekonfiguration sowie von Betriebsparametern zeitlich an die Durchführung des Arbeitsprozesses gekoppelt zu bestimmen.

Das landwirtschaftliche Arbeitssystem ist insbesondere zur Durchführung des Verfahrens nach einem der Ansprüche 1 bis 14 eingerichtet. Auf alle Ausführung zum erfindungsgemäßen Verfahren darf verwiesen werden.

Die vorliegende Erfindung wird nachstehend anhand eines in den Zeichnungen dargestellten Ausführungsbeispieles näher erläutert.

Es zeigen:
- Fig. 1: schematisch eine landwirtschaftliche Arbeitsmaschine eines landwirtschaftlichen Arbeitssystems in Seitenansicht;
- Fig. 2: schematisch das landwirtschaftliche Arbeitssystem aus Arbeitsmaschine und angebautem Anbaugerät; und
- Fig. 3: schematisch eine Darstellung nur der Arbeitsmaschine in einer Betriebssituation, in der an der Geräteschnittstelle ein Anbaugerät angehängt ist.

In den Figuren sind gleiche bzw. funktionsgleiche Bauteile oder Komponenten mit denselben Bezugszeichen versehen.

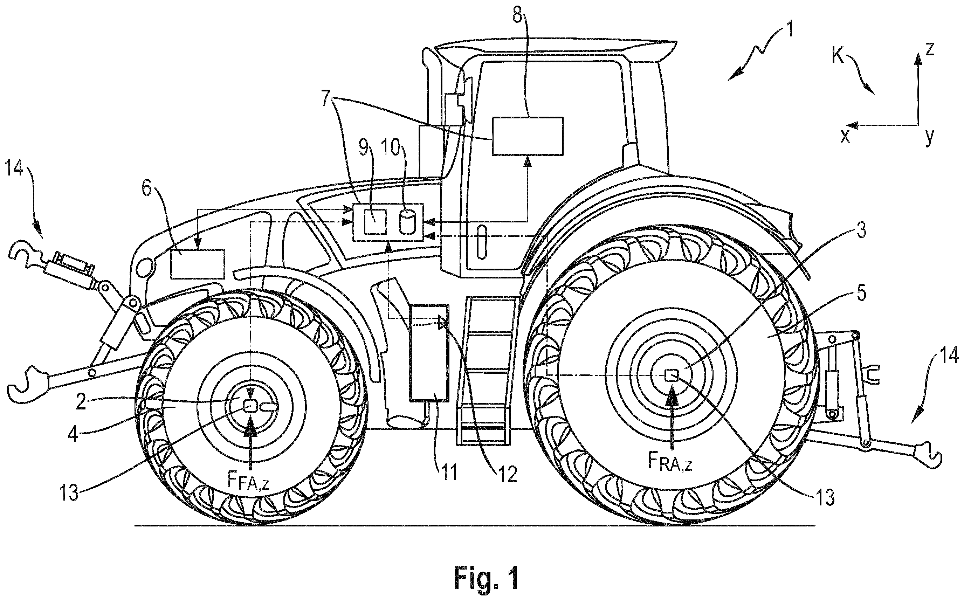

In Fig. 1 ist schematisch eine Arbeitsmaschine 1 eines landwirtschaftlichen Arbeitssystems in Seitenansicht dargestellt. Die als Traktor ausgeführte Arbeitsmaschine 1 umfasst an Achsen 2, 3 angeordnete Bodeneingriffsmittel 4, 5, die hier als Laufräder ausgeführt sind. Die Achse 2 wird nachfolgend als Vorderachse und die Achse 3 als Hinterachse bezeichnet. Die Arbeitsmaschine 1 ist mit einer - lediglich schematisch angedeuteten - Antriebseinheit 6 ausgestattet, die hier und vorzugsweise einen Verbrennungsmotor aufweist. Die Antriebseinheit 6 wirkt in üblicher Weise über einen Antriebsstrang auf die Bodeneingriffsmittel 4, 5. Vorzugsweise handelt es sich bei der Arbeitsmaschine 1 um eine allradgetriebene Arbeitsmaschine 1, sodass alle vier Bodeneingriffsmittel 4, 5 angetrieben bzw. antreibbar sind.

Die Arbeitsmaschine 1 weist Fahrerassistenzsystem 7 auf, dem eine Bedien- und Anzeigeeinheit 8 zugeordnet, die eine Informationsschnittstelle zu dem Bediener der Arbeitsmaschine 1 bereitstellt. Das Fahrerassistenzsystem 7 weist eine Speichereinheit 10 zum Hinterlegen von Daten und eine Recheneinheit 9 zur Verarbeitung der in der Speichereinheit 10 hinterlegten Daten auf.

In die Karosserie der Arbeitsmaschine 1 ist ein als Kraftstofftank ausgeführter Behälter 11 integriert. Der Behälter 11 ist mit einem Füllstandsensor 12 ausgeführt, welcher durch eine Signalleitung Messdaten an das Fahrerassistenzsystem 7 zur Auswertung überträgt.

Zumindest einer der Achsen 2, 3 der Arbeitsmaschine 1 ist eine Sensoranordnung 13 zugeordnet. Hier und bevorzugt ist die Sensoranordnung 13 der Vorderachse 2 zugeordnet. Mittels der von der Sensoranordnung 13 bereitgestellten und durch das Fahrerassistenzsystem 7 ausgewerteten Messdaten kann die an der Vorderachse 2 auftretende Achslast bestimmt werden.

Weiter zeigt die Darstellung in Fig. 1 schematisch und exemplarisch eine Geräteschnittstelle 14 der Arbeitsmaschine 1. Die insbesondere als Traktor ausgeführte Arbeitsmaschine 1 weist in der Regel front- und heckseitig eine solche Geräteschnittstelle 14 auf. Bei der Geräteschnittstelle 14 handelt es sich hier ganz allgemein um eine mechanische Kupplung zwischen der Arbeitsmaschine 1 und einem Anbaugerät 15. Dazu kann die Geräteschnittstelle 14 insbesondere als Dreipunkt-Kraftheber ausgestaltet sein.

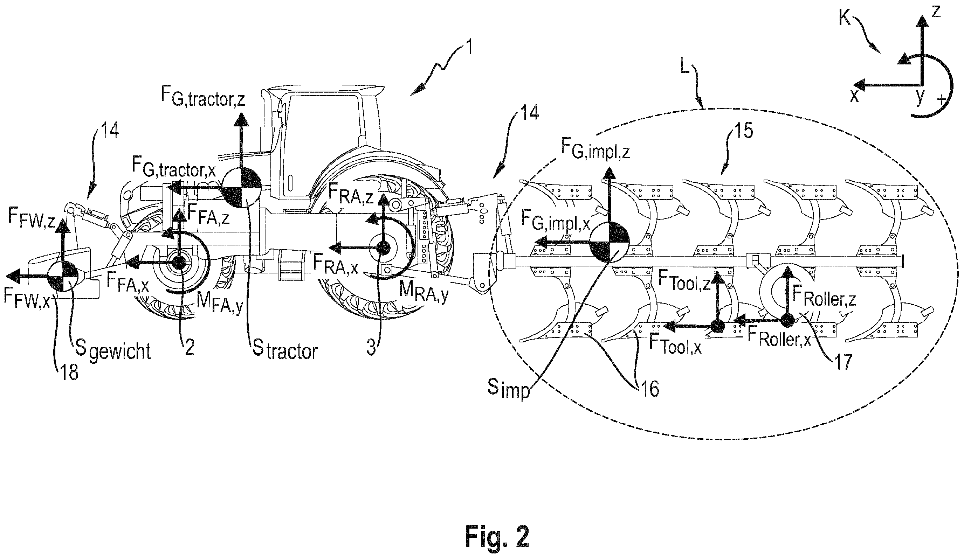

In Fig. 2 ist schematisch das landwirtschaftliche Arbeitssystem aus Arbeitsmaschine 1 und an der Geräteschnittstelle 14 angebautem Anbaugerät 15 dargestellt. Bei dem an die Geräteschnittstelle 14 angebauten Anbaugerät 15 kann es sich im dargestellten Ausführungsbeispiel um ein Bodenbearbeitungsgerät wie einen Pflug, einen Grubber, eine Egge oder dergleichen handeln.

Auf Gesamteffizienz und die Betriebssicherheit bei Durchführung von landwirtschaftlichen Arbeitsprozessen haben absolute Achslasten und Achslastverteilung einen hohen Einfluss. So ist ein ideales Achslastverhältnis beispielsweise von der Bereifung abhängig. Die Lastübertragung vom Anbaugerät 15 auf die Arbeitsmaschine 1 zur Reduktion des Zugkraftbedarfs und Rollwiderstands beeinflusst die Achslastverteilung und die absoluten Achslasten. Weiterhin wird die Achslastverteilung während der Durchführung eines Bodenbearbeitungsprozesses vom Bodenwiderstand und/oder dem Füllstand eines Behältnisses des Anbaugerätes 15 beeinflusst. Ein weiterer Aspekt ist, dass eine minimale Vorderachslast nicht unterschritten werden darf, um ein ausreichendes Lenkverhalten sicherstellen zu können. Des Weiteren soll das Achslastverhältnis bzw. sollen die absoluten Achslasten zur Sicherstellung der Lebensdauer des Antriebsstranges innerhalb entworfener Grenzen verbleiben.

So resultiert eine signifikant von einer optimalen Einstellung abweichende Einstellung der Achslastverteilung in einem erhöhten Kraftstoffverbrauch, einer reduzierten Flächenleistung, höheren flächenspezifischen Kosten sowie einem erhöhten Verschleiß des landwirtschaftlichen Arbeitssystems.

Während der Durchführung von landwirtschaftlichen Arbeitsprozessen können sich Betriebsparameter des Arbeitssystems fortlaufend ändern, was auf äußere Einflüsse, wie beispielsweise die Bodenbeschaffenheit, oder innere Einflüsse, beispielsweise Änderungen des Gewichts des Anbaugerätes 15 aufgrund von Füllstandschwankungen, zurückzuführen ist. Für einen Bediener des Arbeitssystems ist es daher wesentlich, während der Durchführung von landwirtschaftlichen Arbeitsprozessen über die aktuell vorherrschenden, insbesondere vertikalen, Achslasten und das sich daraus ergebende Achslastverhältnis zumindest informiert zu sein.

Hierzu werden an den Achsen 2, 3 der Arbeitsmaschine 1 auftretende Achslasten und ein darauf basierendes Achslastverhältnis unter Berücksichtigung einer Arbeitsmaschinen- und Anbaugerätekonfiguration sowie von Betriebsparametern des Arbeitssystems mittels der Recheneinheit 9 des Fahrerassistenzsystems 7 der Arbeitsmaschine 1 zeitlich an die Durchführung des Arbeitsprozesses gekoppelt zyklisch bestimmt. Die zyklische, in bestimmten, vorzugsweise konstanten, Zeitabständen, durchgeführte Bestimmung der an den Achsen 2, 3 der Arbeitsmaschine 1 während der Durchführung des Arbeitsprozesses auftretenden Achslasten und des darauf basierenden Achslastverhältnisses ermöglicht es, dem Bediener annähernd in Echtzeit Informationen über die sich dynamisch ändernden Achslasten und die Achslastverteilung während der Durchführung des Arbeitsprozesses bereitzustellen.

Mittels der Bedien- und Anzeigeeinheit 8 können die auftretenden Achslasten und das Achslastverhältnis sowie deren Änderungen während der Durchführung des Arbeitsprozesses visualisiert werden. Der Bediener kann anhand von grafisch dargestellten Verläufen für die, insbesondere vertikalen, Achslasten und das Achslastverhältnis frühzeitig auf Änderungen aufmerksam gemacht werden, die sich nachteilig auf den Betrieb des Arbeitssystems auswirken.

Eine bestehende Arbeitsmaschinen- und Anbaugerätekonfiguration kann durch den Bediener des Arbeitssystems zumindest teilweise vorgegeben und/oder zumindest teilweise automatisch durch das Fahrerassistenzsystem 7 ermittelt werden.

Gegenstand der Arbeitsmaschinenkonfiguration sind unter anderem die Masse der Arbeitsmaschine 1, die Schwerpunktlage der leeren Arbeitsmaschine 1, Masse und Lage zusätzlich an der Arbeitsmaschine 1 angeordneter Gewichte, wie beispielsweise Frontgewicht, Radgewicht, Frontlader, Behälter oder dergleichen, die Art der Geräteschnittstelle 14 an der Arbeitsmaschine 1 zur Verbindung mit dem Anbaugerät 15.

Gegenstand der Anbaugerätekonfiguration sind unter anderem die Masse des Anbaugerätes 15, die Schwerpunktlage des Anbaugerätes 15, der Kraftangriffspunkt der Bodenwiderstandskräfte und/oder Rollwiderstände innerhalb des Anbaugerätes 15, die Lage von zumindest einer optional am Anbaugerät 15 angeordneten gewichtsabstützenden Einrichtung wie eine Stützradanordnung 17.

Für die Bestimmung der Achslasten und des Achslastverhältnisses ist zwischen an der Geräteschnittstelle 14 angebauten Anbaugeräten 15 und angehängten Anbaugeräten 15 zu unterscheiden. Hierzu wird anbaugerätespezifisch eine über die zumindest eine Geräteschnittstelle 14 übertragene Geräteschnittstellenlast L bestimmt. Anbaugerätespezifisch heißt in diesem Kontext, dass zwischen der Art des Anbaugerätes 15, zum Beispiel Bodenbearbeitungsgerät oder Güllefass, und der Verbindung mit der Geräteschnittstelle 14 durch Anhängen oder Anbauen und/oder die Verwendung eines Zugkraftverstärkers unterschieden wird. Die Geräteschnittstellenlast L umfasst gewichtsbedingte Lastanteile, bei denen es sich um gravitationsbedingte und/oder trägheitsbedingte Lastanteile handelt sowie prozessbedingte Lastanteile, welche beispielsweise auf den Eingriff zwischen dem Anbaugerät 15 und Feldboden zurückgehen, der beim Pflügen oder dergleichen stattfindet.

Unter der Geräteschnittstellenlast L sind vereinfachend alle relevanten Kräfte und Momente zusammengefasst, die von dem Anbaugerät 3 auf die Arbeitsmaschine 1 wirken.

Das in Fig. 2 dargestellte Arbeitssystem zeigt das angebaute, im Ausführungsbeispiel als Bodenbearbeitungsgerät ausgeführte, Anbaugerät 15. Die in Fig. 2 gezeigten, an der Arbeitsmaschine und dem Anbaugerät 15 wirkenden Kräfte sind auf ein Koordinatensystem K des Arbeitssystems bezogen dargestellt. Die Geräteschnittstellenlast L umfasst in x-Richtung und in z-Richtung wirkende Gewichtskräfte F_{G,impl,x} und F_{G,impl,z}, die im Schwerpunkt Sᵢₘₚ des Anbaugerätes 15 angreifen. Weiterhin umfasst die Geräteschnittstellenlast L jeweils in x-Richtung bzw. in z-Richtung wirkende Kräfte F_{Tool,x}, F_{Tool,z}, F_{Roller,x}, F_{Roller,z}, die von Werkzeugen 16 bzw. der zumindest einen als Stützradanordnung 17 ausgeführten gewichtsabstützenden Einrichtung hervorgerufen werden. Mit x-Richtung ist die Fahrzeuglängsrichtung, mit y-Richtung die Fahrzeugquerrichtung und mit z-Richtung ist die Fahrzeughochrichtung bezeichnet.

An der Arbeitsmaschine 1 sind in analoger Weise Kräfte und Momente dargestellt. An der frontseitigen Geräteschnittstelle 14 ist exemplarisch ein Gewicht 18 zur Ballastierung angeordnet. Im Schwerpunkt S_{gewicht} des Gewichts 18 greifen in x-Richtung und in z-Richtung wirkende Gewichtskräfte F_{FW,x} und F_{FW,Z} an. An der Vorderachse 2 greifen in x-Richtung und in z-Richtung wirkende horizontale und vertikale Achslasten F_{FA,x} und F_{FA,z} sowie ein in y-Richtung wirkendes Moment M_{FA,y} an. Im Schwerpunkt S_{tractor} der Arbeitsmaschine 1 greifen in x-Richtung und in z-Richtung wirkende Gewichtskräfte F_{G,tractor,x} und F_{G,tractor,z} an.

Die Gewichtskräfte F_{G,tractor,x} und F_{G,tractor,z} der Arbeitsmaschine 1, die Gewichtskräfte F_{G,impl,x} und F_{G,impl,z} des Anbaugerätes 15 sowie die Gewichtskräfte F_{FW,x} und F_{Fw,z} des Gewichts 18 zur Ballastierung sind unter Berücksichtigung der Geländetopologie, einer Neigung in Fahrzeugquer- und Fahrzeuglängsrichtung, zu bestimmen.

An der Hinterachse 3 greifen in x-Richtung und in z-Richtung wirkende horizontale und vertikale Achslasten F_{RA,x} und F_{RA,z} sowie ein in y-Richtung wirkendes Moment M_{RA,y} an.

Das Gewicht 18 an der frontseitigen Geräteschnittstelle 14 ist beispielhaft zu verstehen. Weitere Gewichte 18 mit entsprechenden Gewichtskräften unter Berücksichtigung der Geländetopologie und eigenen Schwerpunkten sind zu berücksichtigen, wenn beispielsweise zusätzliche Radgewichte vorgesehen sind oder das Anbaugeräte 15 einen zusätzlichen Behälter für Saatgut und/oder Dünger oder eine Flüssigkeit umfasst. Füllstände eines Behälters des Anbaugeräte 15 können ebenfalls durch eine Sensoranordnung bestimmt werden. Denkbar ist auch eine Bestimmung der vom Behälterinhalt ausgeübten Gewichtskraft, um Änderungen des Gewichts am Anbaugerät 15 zu erfassen, um diese bei der zyklischen Bestimmung der vertikalen Achslasten F_{FA,z} und F_{RA,z} zu berücksichtigen.

Bei dem zur Bodenbearbeitung ausgebildeten angebauten Anbaugerät 15 wird in einem ersten Schritt die auf die Stützradanordnung abgestützte Vertikalkraft F_{Roller,z} aus einem Momentengleichgewicht um die Hinterachse 3 der Arbeitsmaschine 1 bestimmt. In einem zweiten Schritt wird die auf die Hinterachse 3 einwirkende vertikale Achslast F_{RA,z} bestimmt.

In einem dritten Schritt wird das Achslastverhältnis aus den an den Achsen 2, 3 aktuell wirkenden vertikalen Achslasten F_{FA,z}, F_{RA,z} bestimmt und in einem vierten Schritt wird eine Abschätzung der Antriebsmomente M_{FA,y} und M_{RA,y} an den Achsen 2, 3 der Arbeitsmaschine 1 durchgeführt.

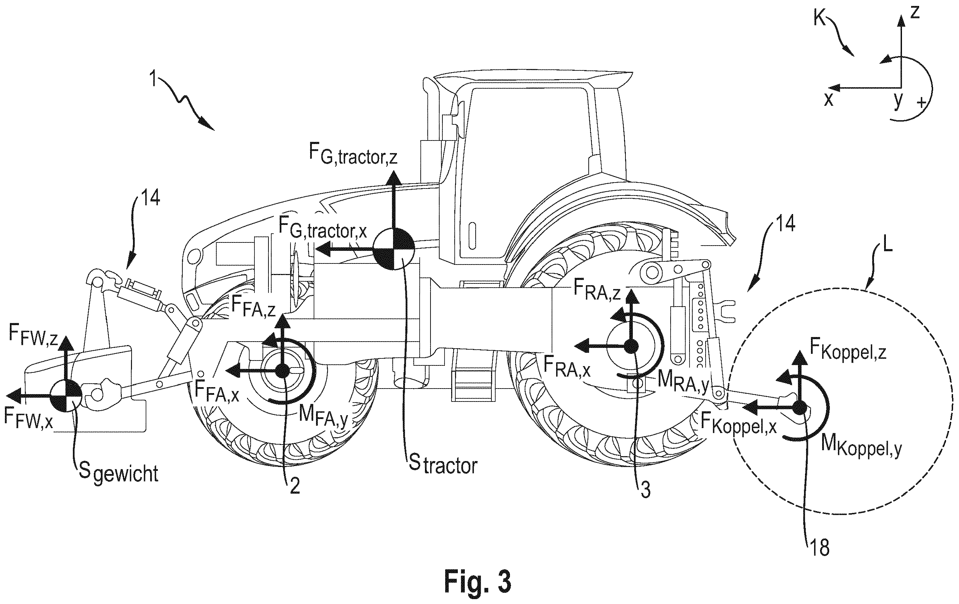

In Fig. 3 ist schematisch eine Darstellung nur der Arbeitsmaschine 1 in einer Betriebssituation dargestellt, in der an der Geräteschnittstelle 14 ein Anbaugerät 15 angehängt ist. Beispielhaft für ein angehängtes Anbaugerät 15 sei eine Bestellkombination genannt. Die Geräteschnittstellenlast L umfasst in x-Richtung und in z-Richtung wirkende Koppelkräfte F_{Koppel,x} und F_{Koppel,z} sowie ein in y-Richtung wirkendes Koppelmoment M_{Koppel,y}, welche im Ankoppelpunkt 18 an der Geräteschnittstelle 14 angreifen.

Bei einem angehängten Anbaugerät 15, das zur Bodenbearbeitung ausgebildet ist, werden in einem ersten Schritt auf Werkzeuge 16 des Anbaugerätes 15 ausgeübte Werkzeugkräfte über Zugleistung und aktuelle Fahrgeschwindigkeit der Arbeitsmaschine 1, ein von dem Anbaugerät 15 auf die Arbeitsmaschine 1 wirkendes Koppelmoment M_{Kop-pel,y} sowie eine vertikale Koppelkraft F_{Koppel,z} mittels Anbaugerätegeometrie, welche aus der Anbaugerätekonfiguration bestimmt, und einem um eine Stützradanordnung 17 gebildeten Momentengleichgewicht bestimmt. In einem zweiten Schritt wird die auf eine der Achsen 2, 3, insbesondere die Hinterachse 3, einwirkende vertikale Achslast F_{RA,z} bestimmt.

Bei der Bestimmung des Koppelmomentes M_{Koppel,y} eines angehängten Anbaugerätes 15 ist das Vorhandensein eines Zugkraftverstärkers bei fehlender Oberlenkeranbindung zu berücksichtigen.

Hingegen wird bei einem angehängten Anbaugerät 15, welches dem Transport von Erntegut, Hilfs- und/oder Betriebsstoffen dient, in einem ersten Schritt eine Abschätzung des Rollwiderstands zur Bestimmung der Koppelkräfte F_{Koppel,x} und F_{Koppel,z} durchgeführt. Im zweiten Schritt wird die auf eine der Achsen 2, 3, insbesondere die Hinterachse 3, einwirkende vertikale Achslast F_{RA,z} bestimmt wird.

Wie bei dem angebauten Anbaugerät 15 auch, wird im dritten Schritt das Achslastverhältnis aus den an den Achsen 2, 3 aktuell wirkenden vertikalen Achslasten F_{FA,z}, F_{RA,z} bestimmt und im vierten Schritt eine Abschätzung der Antriebsmomente M_{FA,y} und M_{RA,y} an den Achsen 2, 3 der Arbeitsmaschine 1 durchgeführt.

Zur Abschätzung des Antriebsmomentes kann eine Abschätzung eines Triebkraftbeiwertes unter Verwendung von in den ersten und zweiten Schritten bestimmten Größen, den Gewichtskräften F_{Fw,x}, F_{G,tractor,x}, F_{G,imp,x}, der von der Stützradanordnung hervorgerufenen Kraft in x-Richtung F_{Roller,x}, sowie den vertikalen Achslasten F_{FA,z}, F_{RA,z} an Vorderachse 2 und Hinterachse 3, für angehängte oder angebaute Anbaugeräte 15 durchgeführt werden.

Neben dem als Kraftstofftank ausgeführten Behälter 11 kann das Anbaugerät 15 ebenfalls mit Behältern ausgeführt sein, wie weiter oben bereits erläutert. Im laufenden Betrieb ändern sich die Füllstände durch Verbrauch das darin enthaltenen Hilfs- und/oder Betriebsstoffe. Daher wird das variable Füllvolumen eines Behältnisses des Anbaugerätes 15 und/oder der Arbeitsmaschine 1 und/oder die räumliche Anordnung des Behältnisses 11 in Bezug auf die Arbeitsmaschine 1 bei der Bestimmung der sich dynamisch ändernden vertikalen Achslasten F_{FA,z}, F_{RA,z} berücksichtigt. Die Lage bzw. räumliche Anordnung eines Behältnisses an der Arbeitsmaschine 1 sowie dem Anbaugerät 15 kann unter anderem durch eine Eingabe des Bedieners mittels der Bedien- und Anzeigeeinheit 8, aus der in der Speichereinheit 10 hinterlegten Arbeitsmaschinen- und Anbaugerätekonfiguration bestimmt werden. Die Änderung des Füllstands lässt sich sensorisch erfassen.

Um eine hohe Genauigkeit der zyklischen Bestimmung der vertikalen Achslasten F_{FA,z}, F_{RA,z} und der sich daraus ergebenden Achslastverteilung zu gewährleisten, sind die Messung der vertikalen Achslast F_{FA,z} an der Vorderachse 2 beeinflussende Effekte zu berücksichtigen. Beispielsweise kann die sensorische Ermittlung der vertikalen Achslast F_{FA,z} an der Vorderachse 2 durch eine direkte Druckmessung in einer hydropneumatischen Vorderachs-Federung nicht die Masse des ungefederten Teils der Vorderachse 2 sowie der vorderen Bodeneingriffsmittel, wie von Reifen, berücksichtigen. Bei einer Verwendung von angehängten Anbaugeräten 15 hat das durch einen Zugkraftverstärker aufgeprägte Koppelmoment M_{Koppel,y} zwischen der Arbeitsmaschine 1 und dem Anbaugerät 15 einen Einfluss auf die Achslastverteilung.

Zur erfindungsgemäßen Bestimmung der sich dynamisch verändernden vertikalen Achslasten F_{FA,z}, F_{RA,z} im Arbeitsprozess kann es erforderlich sein, die initiale Ballastierung der Arbeitsmaschine 1 zu kennen. Zur initialen Ballastierung gehören Daten zum Leergewicht der Arbeitsmaschine 1, die initiale Achslastverteilung, ein Koppelmoment, sofern ein angehängtes Anbaugeräte 15 mit einem Drehmoment übertragenden Zugkraftverstärker verwendet wird. Darüber hinaus ist die Kenntnis des Schwerpunktes Sᵢₘₚ des Anbaugerätes 15 relevant.

Zur Bestimmung einer initialen Ballastierung der Arbeitsmaschine 1 und/oder des Anbaugerätes 15 kann ein dialogbasierter Ablauf durch das Fahrerassistenzsystem 7 vorgegeben werden. Der Bediener kann mittels der Bedien- und Anzeigeeinheit 8 über einen natürlichsprachigen Dialog angeleitet werden, um die erforderlichen Schritte und Eingaben durchzuführen.

Für eine Basis-Kalibrierung nur der Arbeitsmaschine 1 kann eine Abfolge von Schritten vorgesehen, die das Wägen auf einer Waage umfasst. Dabei kann zunächst das anteilige Gewicht der Arbeitsmaschine 1 aufgenommen werden, welche lediglich mit der Vorderachse 2 auf der Waage steht. Anschließend kann eine Messroutine ausgeführt werden, mittels der eine initiale vertikale Achslast durch die Sensoranordnung 13 bestimmt wird. Anschließend wird die Arbeitsmaschine 1 vollständig auf die Waage gefahren und gewogen. Zudem wird der Kraftstofffüllstand im Behälter 11 bestimmt.

Daran kann sich eine Anbaugeräte-Kalibrierung anschließen, welche nach dem Anbau bzw. Anhängen des Anbaugerätes 15 durchgeführt wird. Zunächst wird auch hier das anteilige Gewicht der Arbeitsmaschine 1 mit daran angeordneten Anbaugerät 15 aufgenommen werden, welche lediglich mit der Vorderachse 2 auf der Waage steht. Anschließend kann die Messroutine ausgeführt werden, mittels der die initiale vertikale Achslast unter Berücksichtigung des Anbaugerätes 15 durch die Sensoranordnung 13 bestimmt wird. Ist im Fall des angehängten Anbaugerätes 15 ein Zugkraftverstärker vorgesehen, so wird dieser eingeschaltet und die anteilige Wägung sowie die sich daran anschließende Messroutine werden erneut ausgeführt. Anschließend wird der Zugkraftverstärker abgeschaltet. Danach wird die Arbeitsmaschine 1 mit angehängtem oder angebautem Anbaugerät 15 auf die Waage gefahren, wobei sich nur die Achsen 2, 3 der Arbeitsmaschine 1 auf der Waage befinden. Die zumindest eine optionale Stützradanordnung 17 des Anbaugerätes 15 oder Räder eines als Transportwagens oder Güllefasses ausgeführten Anbaugerätes 15 befinden sich dabei nicht auf der Waage. Nach erfolgter Aufnahme des Gewichts des Arbeitsgerätes 1 wird das komplette Arbeitssystem auf die Waage bewegt, um das Gesamtgewicht zu bestimmen. Anschließend wird zur Bestimmung des auf zumindest eine Anbaugeräteachse wirkenden Gewichts das Anbaugerät 15 mit seiner zumindest einen Stützradanordnung 17 oder den Fahrzeugachsen auf die Waage gefahren, um das Gewicht der Anbaugeräteachse aufzunehmen.

Sowohl bei der Basis-Kalibrierung als auch der Anbaugeräte-Kalibrierung ist vorgesehen, dass der Bediener des Arbeitssystems durch das Fahrerassistenzsystem 7 interaktiv durch alle durchzuführenden Verfahrensschritte geleitet und, soweit erforderlich, zur Eingabe von Daten mittels der Bedien- und Anzeigeeinheit 8 angehalten wird.

Durch das Fahrerassistenzsystem 7 können die während der Durchführung des Arbeitsprozesses zyklisch bestimmten vertikalen Achslasten F_{FA,z}, F_{RA,z} und die Achslastverteilung mit Grenzwerten verglichen werden. Bei einem Passieren eines der Grenzwerte kann zumindest ein Warnhinweis mittels der Bedien- und Anzeigeeinheit 8 ausgegeben werden. Der Bediener kann dadurch frühzeitig auf eine Betriebssituation aufmerksam gemacht werden, in welcher mit den bestehenden Betriebsparametern ein optimaler Betrieb des Arbeitssystems nicht gegeben ist.

Durch das Fahrerassistenzsystem 7 kann beim Passieren eines der Grenzwerte eine Anpassung von zumindest einem Betriebsparameter bestimmt werden, der dem Bediener mittels der Bedien- und Anzeigeeinheit 8 zur manuellen Auswahl und/oder zur Durchführung vorgeschlagen wird und/oder von dem Fahrerassistenzsystem 7 automatisch umgesetzt wird.

### Bezugszeichenliste

| | | | |
|---|---|---|---|
| 1 | Arbeitsmaschine | F_{Roller,x} | Kraft |
| 2 | Achse/Vorderachse | F_{Roller,x} | Kraft |
| 3 | Achse/Hinterachse | Sᵢₘₚ | Schwerpunkt von 15 |
| 4 | Bodeneingriffsmittel | S_{tractor} | Schwerpunkt von 1 |
| 5 | Bodeneingriffsmittel | S_{gewicht} | Schwerpunkt von 18 |
| 6 | Antriebseinheit | K | Koordinatensystem |
| 7 | Fahrerassistenzsystem | x | x-Richtung |
| 8 | Bedien- und Anzeigeeinheit | y | y-Richtung |
| 9 | Recheneinheit | z | z-Richtung |
| 10 | Speichereinheit | | |
| 11 | Behälter | | |
| 12 | Füllstandsensor | | |
| 13 | Sensoranordnung | | |
| 14 | Geräteschnittstelle | | |
| 15 | Anbaugerät | | |
| 16 | Werkzeug | | |
| 17 | Stützradanordnung | | |
| F_{FA,x} | Horizontale Achslast von 2 | | |
| F_{FA,z} | Vertikale Achslast von 2 | | |
| F_{RA,x} | Horizontale Achslast von 3 | | |
| F_{RA,x} | Vertikale Achslast von 3 | | |
| M_{FA,y} | Moment | | |
| M_{RA,y} | Moment | | |
| F_{G,tractor,x} | Gewichtskraft von 1 | | |
| F_{G,tractor,z} | Gewichtskraft von 1 | | |
| F_{FW,x} | Gewichtskraft von 18 | | |
| F_{FW},_{z} | Gewichtskraft von 18 | | |
| F_{G,impl,x} | Gewichtskraft von 15 | | |
| F_{G,impl,z} | Gewichtskraft von 15 | | |
| F_{Tool,x} | Kraft | | |
| F_{Tool,z} | Kraft | | |

## Patentansprüche

1. Verfahren zum Betreiben eines landwirtschaftlichen Arbeitssystems, umfassend eine zumindest zwei Achsen (2, 3) aufweisende landwirtschaftliche Arbeitsmaschine (1) mit zumindest einer Geräteschnittstelle (14) sowie ein Anbaugerät (15), welches mittels der Geräteschnittstelle (14) mit der Arbeitsmaschine (1) zur Durchführung eines landwirtschaftlichen Arbeitsprozesses verbunden wird, wobei eine Achslast (F_{FA,x}, F_{FA,z}, F_{RA,x}, F_{FA,z}) an zumindest einer Achse (2, 3) mittels einer Sensoranordnung (13) bestimmt wird, **dadurch gekennzeichnet, dass** an den Achsen (2, 3) der Arbeitsmaschine (1) auftretende Achslasten (F_{FA,x},F_{FA,z}, F_{RA,x}, F_{RA,z}) und ein darauf basierendes Achslastverhältnis unter Berücksichtigung einer Arbeitsmaschinen- und Anbaugerätekonfiguration sowie von Betriebsparametern mittels einer Recheneinheit (8) eines Fahrerassistenzsystems (7) der Arbeitsmaschine (1) zeitlich an die Durchführung des Arbeitsprozesses gekoppelt zyklisch bestimmt werden.

2. Verfahren nach Anspruch 1, **dadurch gekennzeichnet, dass** das Fahrerassistenzsystem (7) eine Bedien- und Anzeigeeinheit (8) umfasst, mittels der die auftretenden Achslasten (F_{FA,x}, F_{FA,z} F_{RA,x}, F_{FA,z}) und das Achslastverhältnis sowie deren Änderungen während der Durchführung des Arbeitsprozesses visualisiert werden.

3. Verfahren nach Anspruch 1 oder 2, **dadurch gekennzeichnet, dass** die bestehende Arbeitsmaschinen- und Anbaugerätekonfiguration durch einen Bediener des Arbeitssystems zumindest teilweise vorgegeben und/oder zumindest teilweise automatisch durch das Fahrerassistenzsystem (7) ermittelt wird.

4. Verfahren nach einem der Ansprüche 1 bis 3, **dadurch gekennzeichnet, dass** für die Bestimmung der Achslasten (F_{FA,x}, F_{FA,z}, F_{RA,x}, F_{FA,z}) und des Achslastverhältnisses zwischen an der Geräteschnittstelle (14) angebauten Anbaugeräten (15) und angehängten Anbaugeräten (15) unterschieden wird.

5. Verfahren nach Anspruch 4, **dadurch gekennzeichnet, dass** anbaugerätespezifisch eine über die zumindest eine Geräteschnittstelle (14) auf die Arbeitsmaschine (1) übertragene Geräteschnittstellenlast (L) bestimmt wird.

6. Verfahren nach Anspruch 4 oder 5, **dadurch gekennzeichnet, dass** bei einem angebauten Anbaugerät (15) zur Bodenbearbeitung in einem ersten Schritt auf Werkzeuge des Anbaugerätes (15) ausgeübte Werkzeugkräfte (F_{TOOL,x}, F_{TOOL,z}) über Zugleistung und aktuelle Fahrgeschwindigkeit der Arbeitsmaschine (1), eine auf zumindest eine gewichtsabstützende Einrichtung (17) abgestützte Vertikalkraft (F_{ROLLER,z}) aus einem Momentengleichgewicht um eine der Achsen (2, 3), insbesondere der Hinterachse (3), der Arbeitsmaschine (1) bestimmt wird, und dass in einem zweiten Schritt eine auf diese Achse (2, 3) einwirkende vertikale Achslast (F_{FA,z}, F_{RA,z}) bestimmt wird.

7. Verfahren nach Anspruch 4 oder 5, **dadurch gekennzeichnet, dass** bei einem angehängten Anbaugerät (15) zur Bodenbearbeitung in einem ersten Schritt auf Werkzeuge des Anbaugerätes (15) ausgeübte Werkzeugkräfte (F_{TOOL,x}, F_{TOOL,z}) über Zugleistung und aktuelle Fahrgeschwindigkeit der Arbeitsmaschine (1), ein von dem Anbaugerät (15) auf die Arbeitsmaschine (1) wirkendes Koppelmoment (M_{Koppel,y}) sowie eine vertikale Koppelkraft (F_{Koppel,z}) mittels Anbaugerätegeometrie und der Bestimmung eines Momentengleichgewichts um zumindest eine gewichtsabstützende Einrichtung (17) des Anbaugerätes (15) bestimmt werden, und dass in einem zweiten Schritt eine auf eine der Achsen (2, 3), insbesondere die Hinterachse (3), einwirkende vertikale Achslast (F_{FA,z}, F_{RA,z}) bestimmt wird.

8. Verfahren nach Anspruch 4 oder 5, **dadurch gekennzeichnet, dass** bei einem angehängten Anbaugerät (15), welches dem Transport von Erntegut, Hilfs- und/oder Betriebsstoffen dient, in einem ersten Schritt eine Abschätzung des Rollwiderstands zur Bestimmung der Koppelkräfte (F_{Koppel,x}, F_{Koppel,z}) durchgeführt wird, und dass in einem zweiten Schritt eine auf eine der Achsen (2, 3), insbesondere die Hinterachse (3), einwirkende vertikale Achslast (F_{FA,z}, F_{RA,z}) bestimmt wird.

9. Verfahren nach einem der vorangehenden Ansprüche, **dadurch gekennzeichnet, dass** ein variables Füllvolumen eines Behältnisses (11) der Arbeitsmaschine (1) und/oder des Anbaugerätes (15) und/oder die räumliche Anordnung des Behältnisses (11) in Bezug auf die Arbeitsmaschine (1) bei der Bestimmung der vertikalen Achslast (F_{FA,z}, F_{RA,z}) berücksichtigt wird.

10. Verfahren nach einem der Ansprüche 4 bis 9, **dadurch gekennzeichnet, dass** in einem dritten Schritt das Achslastverhältnis bestimmt wird, und das in einem vierten Schritt eine Abschätzung eines Antriebsmomentes an den Achsen (2, 3) der Arbeitsmaschine (1) durchgeführt wird.

11. Verfahren nach Anspruch 10, **dadurch gekennzeichnet, dass** zur Abschätzung des Antriebsmomentes eine Abschätzung eines Triebkraftbeiwertes unter Verwendung von in den ersten und zweiten Schritten bestimmten Größen für angehängte oder angebaute Anbaugeräte (15) durchgeführt wird.

12. Verfahren nach einem der vorangehenden Ansprüche, **dadurch gekennzeichnet, dass** zur Bestimmung einer initialen Ballastierung der Arbeitsmaschine (1) und/oder des Anbaugerätes (15) ein dialogbasierter Ablauf durch das Fahrerassistenzsystem (7) vorgegeben wird.

13. Verfahren nach einem der vorangehenden Ansprüche, **dadurch gekennzeichnet, dass** durch das Fahrerassistenzsystem (7) die während der Durchführung des Arbeitsprozesses zyklisch bestimmten, insbesondere vertikalen, Achslasten (F_{FA,x}, F_{FA,z}, F_{RA,x}, F_{FA,z}) und die Achslastverteilung mit Grenzwerten verglichen werden und bei einem Passieren eines der Grenzwerte ein Warnhinweis mittels der Bedien- und Anzeigeeinheit (8) ausgegeben wird.

14. Verfahren nach Anspruch 13, **dadurch gekennzeichnet, dass** durch das Fahrerassistenzsystem (7) beim Passieren eines der Grenzwerte eine Anpassung von zumindest einem Betriebsparameter bestimmt werden, der dem Bediener mittels der Bedien-und Anzeigeeinheit (8) zur manuellen Auswahl und/oder zur Durchführung vorgeschlagen wird und/oder von dem Fahrerassistenzsystem (7) automatisch umgesetzt wird.

15. Landwirtschaftliches Arbeitssystem, umfassend eine zumindest zwei Achsen aufweisende landwirtschaftliche Arbeitsmaschine (1) mit zumindest einer Geräteschnittstelle (14) sowie ein Anbaugerät (15), welches mittels der Geräteschnittstelle (14) mit der Arbeitsmaschine (1) zur Durchführung eines landwirtschaftlichen Arbeitsprozesses verbunden ist, wobei an zumindest einer Achse (2, 3) eine Sensoranordnung (13) zur Bestimmung einer Achslast (F_{FA,x}, F_{FA,z} F_{RA,x}, F_{RA,z}) angeordnet ist, **dadurch gekennzeichnet, dass** die Arbeitsmaschine (1) ein Fahrerassistenzsystem (7) mit einer Recheneinheit (8) umfasst, welches dazu eingerichtet ist, an den Achsen (2, 3) der Arbeitsmaschine (1) auftretende Achslasten (F_{FA,x}, F_{FA,z}, F_{RA,x}, F_{RA,z}) und ein darauf basierendes Achslastverhältnis unter Berücksichtigung einer Arbeitsmaschinen-und Anbaugerätekonfiguration sowie von Betriebsparametern zeitlich an die Durchführung des Arbeitsprozesses gekoppelt zu bestimmen.
